# DEMANDE DE BREVET EUROPEEN

(11) **EP 0 992 427 A1**
(43) Date de publication de la demande: **12.04.2000**
(21) Numéro de dépôt: 99402439.6
(22) Date de dépôt: 05.10.1999
(51) Int. Cl.: B64C 1/14, E05F 15/10

(54) **Actionneur de manoeuvre d'une trappe d'accès et trappe d'accès le comportant**

(30) Priorité: 09.10.1998 FR 9812698
(71) Demandeur: LABINAL, 78180 Montigny le Bretonneux (FR)
(72) Inventeur: Marin-Martinod, Thierry, 95690 Nesles-La-Vallée (FR); Quenerch'du, Marc, 95820 Bruyères Sur Oise (FR)
(74) Mandataire: Blot, Philippe Robert Emile

(57) **Abrégé**

L'invention concerne un actionneur de manoeuvre d'une trappe d'accès d'un avion, comportant un corps (18) muni d'un organe moteur (20) et d'un organe de commande (24) mobile par rapport au corps (18) sous l'action de l'organe moteur (20). L'organe moteur (20) est un moteur électrique, et les moyens mécaniques (22) de transmission de mouvement sont montés dans le corps (18), entre le moteur électrique (20) et l'organe de commande (24), pour assurer l'entraînement dudit organe de commande (24) par le moteur électrique (20). Les moyens de transmission (22) comportent des moyens (26) de désaccouplement mécanique du moteur électrique (20) et de l'organe de commande (24), autorisant, après désaccouplement, le déplacement de l'organe de commande (24) indépendamment du moteur électrique (20).

## Description

La présente invention concerne un actionneur de manoeuvre d'une trappe d'accès d'un avion, du type comportant un corps muni d'un organe moteur et d'un organe de commande mobile par rapport au corps sous l'action de l'organe moteur. Elle concerne en outre une trappe d'accès motorisée d'un avion.

Dans les avions actuels, les trappes d'accès au coffre à bagages, ou les portes permettant l'accès des passagers à l'intérieur de la carlingue sont motorisées par l'intermédiaire d'actionneurs hydrauliques. Ceux-ci permettent le déplacement de panneaux d'obturation entre une position d'obturation du passage et une position écartée libérant ce passage.

Dans la suite de la description, l'expression trappe est utilisée pour désigner indépendamment une trappe, une porte ou tout autre organe mobile d'obturation d'un passage, tels que des trappes d'accès aux éléments propulsifs d'un avion.

Les actionneurs utilisés actuellement pour cette application sont des actionneurs hydrauliques dont le fonctionnement est assuré grâce à un vérin alimenté par un fluide hydraulique sous pression.

Avec un actionneur hydraulique, lorsque le panneau d'obturation est dans sa position d'obturation, l'alimentation de l'actionneur par le fluide hydraulique est interrompue. Or, le vérin intégré dans l'actionneur hydraulique n'exerce qu'un très faible effort, de sorte que le panneau d'obturation peut. même en l'absence d'énergie d'alimentation, voire en cas d'incidents graves sur l'avion, être déplacé manuellement par l'équipage ou des équipes de secours, sans que l'actionneur hydraulique n'entrave le mouvement du panneau en bloquant celui-ci.

Bien entendu, afin d'éviter toute ouverture intempestive des trappes lorsque l'avion est en vol, des moyens de verrouillage additionnels sont prévus pour condamner le mouvement du panneau d'obturation.

De plus, l'actionneur ne doit induire aucune contrainte dans la structure de l'avion une fois la trappe fermée. A cet effet, le circuit hydraulique de commande de l'actionneur hydraulique est ouvert pour provoquer une chute de pression dans l'actionneur.

Les actionneurs hydrauliques fonctionnent de manière satisfaisante. Toutefois, ils nécessitent une source de fluide hydraulique sous pression et des canalisations pour l'acheminement de celui-ci jusqu'à chaque actionneur. Le réseau de canalisations augmente la complexité de l'avion.

L'invention a pour but de fournir une solution alternative aux actionneurs hydrauliques pour la commande des trappes d'accès d'un avion, qui permette que l'effort exercé par l'actionneur soit faible lors de l'arrêt de celui-ci.

A cet effet, l'invention a pour objet un actionneur de manoeuvre d'une trappe d'accès d'un avion du type précité, caractérisé en ce que l'organe moteur est un moteur électrique, et en ce que des moyens mécaniques de transmission de mouvement sont montés dans le corps, entre le moteur électrique et l'organe de commande, pour assurer l'entraînement dudit organe de commande par le moteur électrique, lesquels moyens de transmission comportent des moyens de désaccouplement mécanique du moteur électrique et de l'organe de commande, autorisant, après désaccouplement. le déplacement de l'organe de commande indépendamment du moteur électrique.

Suivant des modes particuliers de réalisation, l'actionneur comporte l'une ou plusieurs des caractéristiques suivantes :
- les moyens de désaccouplement comportent un crabot et des moyens de manoeuvre du crabot pour son déplacement entre une position crabotée et une position décrabotée ;
- les parties complémentaires du crabot sont portées, pour l'une, par un pignon des moyens de transmission et pour l'autre par un arbre de transmission sur lequel le pignon est monté coulissant entre la position crabotée et la position décrabotée, lequel pignon est libre en rotation sur ledit arbre lorsqu'il n'est pas craboté ;
- lesdits moyens de manoeuvre du crabot comportent un électro-aimant ;
- il comporte des moyens de détection d'un état de fermeture de la trappe, et les moyens de désaccouplement sont adaptés pour assurer le désaccouplement mécanique du moteur électrique et de l'organe de commande (24) lors de la détection d'un état de fermeture de la trappe ;
- lesdits moyens de détection comportent un capteur porté par le corps et adapté pour détecter une position extrême de l'organe de commande ; et
- lesdits moyens de transmission comportent un agencement à vis-écrou assurant un entraînement en translation dudit organe de commande par rapport au corps à partir du mouvement de rotation du moteur électrique.

L'invention a en outre pour objet une trappe d'accès motorisée d'un avion, caractérisée en ce qu'elle comporte un panneau d'obturation déplaçable par rapport à la structure de l'avion, entre une position d'obturation d'une ouverture, et une position dégagée de cette ouverture, et un actionneur tel que décrit ci-dessus pour le déplacement dudit panneau d'obturation, la trappe comportant en outre des moyens d'activation des moyens de désaccouplement de l'actionneur, lorsque le panneau d'obturation est en position d'obturation.

Suivant des modes particuliers de réalisation, la trappe d'accès comporte l'une ou plusieurs des caractéristiques suivantes :
- elle comporte des moyens de verrouillage du panneau d'obturation en position d'obturation.

L'invention sera mieux comprise à la lecture de la description qui va suivre, donnée uniquement à titre d'exemple et faite en se référant aux dessins sur lesquels :
- Les figures 1 et 2 sont des vues en perspective de la partie avant d'un avion dont la porte d'accès à la carlingue est, respectivement, en position fermée et en position ouverte ;
- La figure 3 est une vue schématique en coupe longitudinale d'un actionneur selon l'invention ;
   La figure 4 est une vue schématique en coupe de l'actionneur de la figure 3 prise suivant la ligne IV-IV ; et
   Les figures 5 et 6 sont des vues partielles en coupe prises suivant la ligne V-V de l'actionneur avec ses moyens de transmission de puissance respectivement en position désaccouplés et accouplés.

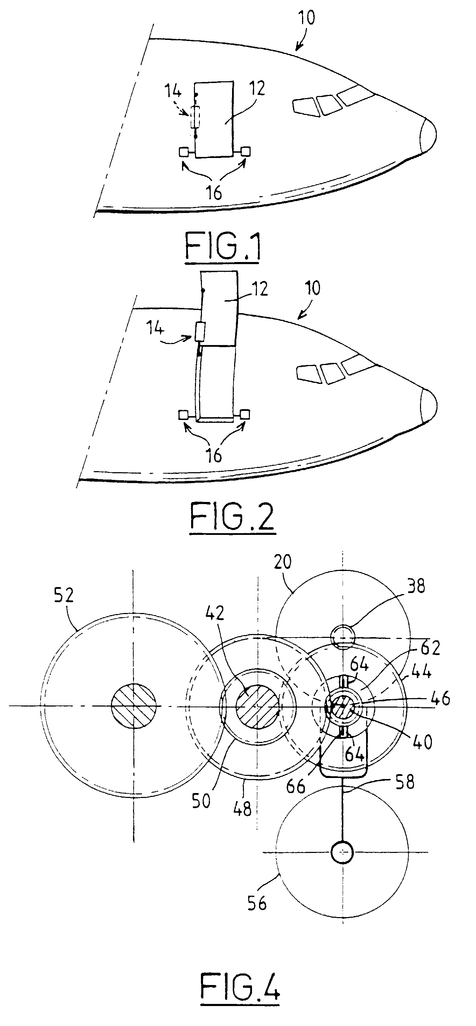

Sur la figure 1 est représentée la partie avant de la carlingue 10 d'un avion. Sur sa paroi latérale est prévue une porte 12 d'obturation d'un passage d'accès à la carlingue. La porte 12 est articulée dans sa partie supérieure autour de charnières à axe horizontal. Elle est déplaçable entre une position d'obturation du passage telle que représentée sur la figure 1 et une position ouverte représentée sur la figure 2.

La porte 12 est commandée par un actionneur 14 selon l'invention. L'actionneur 14 est disposé latéralement le long de la porte 12. Une de ses extrémités est articulée sur la structure de l'avion et l'autre extrémité est articulée sur un bord latéral de la porte 12.

De plus, des moyens 16 de verrouillage de la porte 12 sont prévus pour assurer une retenue de la porte dans sa position d'obturation.

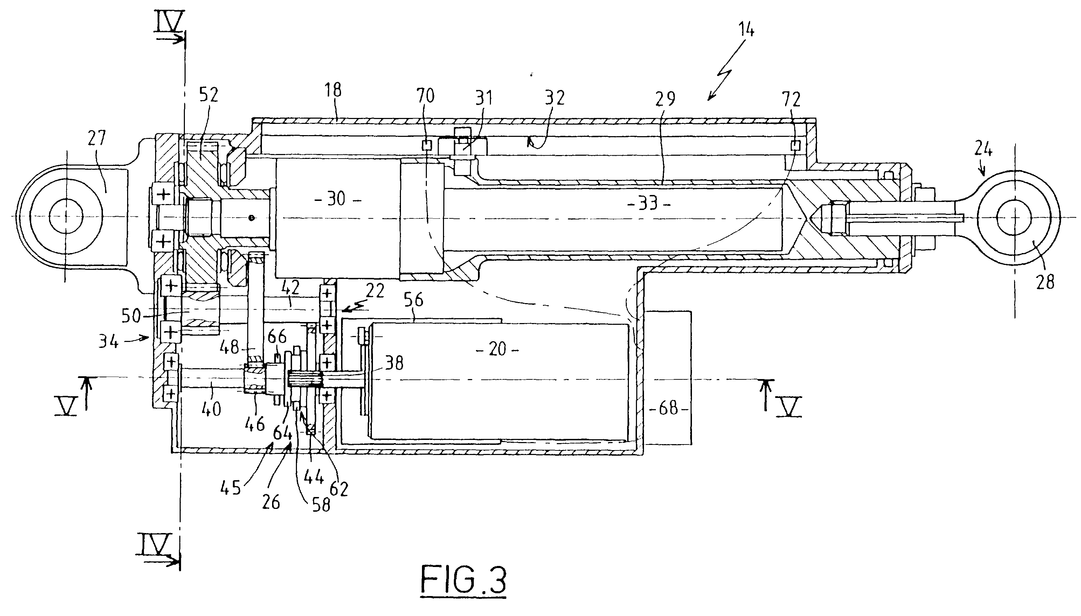

L'actionneur 14 selon l'invention est représenté sur la figure 3. Il comporte un boîtier allongé 18 formant corps à l'intérieur duquel est reçu un organe moteur 20 constitué d'un moteur électrique. Il comporte en outre des moyens 22 de transmission assurant l'entraînement depuis le moteur électrique 20 d'un organe de commande 24 mobile par rapport au corps 18. Selon l'invention, les moyens de transmission 22 comportent des moyens 26 de désaccouplement mécanique du moteur électrique 20 et de l'organe de commande 24.

Le corps 18 comporte à une extrémité une chape 27 pour son articulation sur la structure de l'avion. L'organe de commande 24 présente à son extrémité une lumière 28 pour sa liaison articulée sur le bord de la porte 12.

Dans le mode de réalisation représenté, l'organe de commande 24 est déplaçable en translation par rapport au corps 18. A cet effet, il est porté à une extrémité d'un tube 29 portant axialement, à son autre extrémité, un écrou 30. Une patte 31 s'étendant radialement depuis le tube 29 est montée à coulissement dans un rail rectiligne 32 porté par le corps 18. Ainsi, le tube 29 est fixe en rotation par rapport au corps 18 à l'intérieur duquel il est déplaçable en translation. L'écrou 30 est vissé sur une tige filetée 33 mue par le moteur 20 par l'intermédiaire d'un train 34 de pignons formant un réducteur de vitesse.

Ainsi, l'écrou 30 et la tige filetée 33 constituent un ensemble vis-écrou assurant une conversion d'un mouvement de rotation imprimé par le moteur 20 en un mouvement de translation de l'organe de commande 24.

Le réducteur 34 comporte depuis un arbre de sortie 38 du moteur, deux arbres intermédiaires 40, 42 s'étendant tous deux parallèlement à la tige filetée 33. Les arbres intermédiaires 40, 42 sont montés rotatifs sur des paliers portés par le corps 18 de l'actionneur.

Le premier arbre 40 est lisse et porte un pignon coulissant 44 engrené avec l'arbre de sortie 38. Ce dernier est denté sur l'essentiel de sa longueur. L'arbre 40 et le pignon 44 comportent des profils en saillie et en creux complémentaires permettant leur crabotage afin d'assurer leur solidarisation en rotation. En position décrabotée, le pignon 44 est libre en rotation autour de l'arbre 40. Le crabot, noté 45, sera décrit plus en détail dans la suite de la description.

L'arbre 40 porte, en outre, un pignon 46 de diamètre inférieur au pignon 44. Le pignon 46 est solidaire en rotation de l'arbre 40. Il coopère avec un pignon 48 de plus grande taille solidaire du second arbre 42. Ce dernier comporte en outre un second pignon 50 de diamètre plus petit que le pignon 48. Celui-ci coopère avec un pignon 52 de diamètre supérieur solidarisé axialement à l'extrémité de la tige filetée 33.

Les moyens 26 de désaccouplement comportent, outre le crabot 45, des moyens 54 de déplacement axial du pignon coulissant 44. Ceux-ci comportent un électro-aimant 56 assurant le déplacement d'une fourchette 58 dont les deux branches sont engagées dans une gorge annulaire 60 ménagée autour d'un prolongement 62 du moyeu du pignon 44. Le prolongement 62 est prévu en avant de la couronne dentée du pignon 44.

Le prolongement 62 comporte, sur sa face frontale, deux encoches radiales 64 adaptées pour coopérer avec les deux extrémités en saillie d'une goupille 66 traversant axialement l'arbre 40. La goupille 66 et les encoches 64 assurent un crabotage du pignon mobile 44 et de l'arbre 40 et constituent le crabot 45.

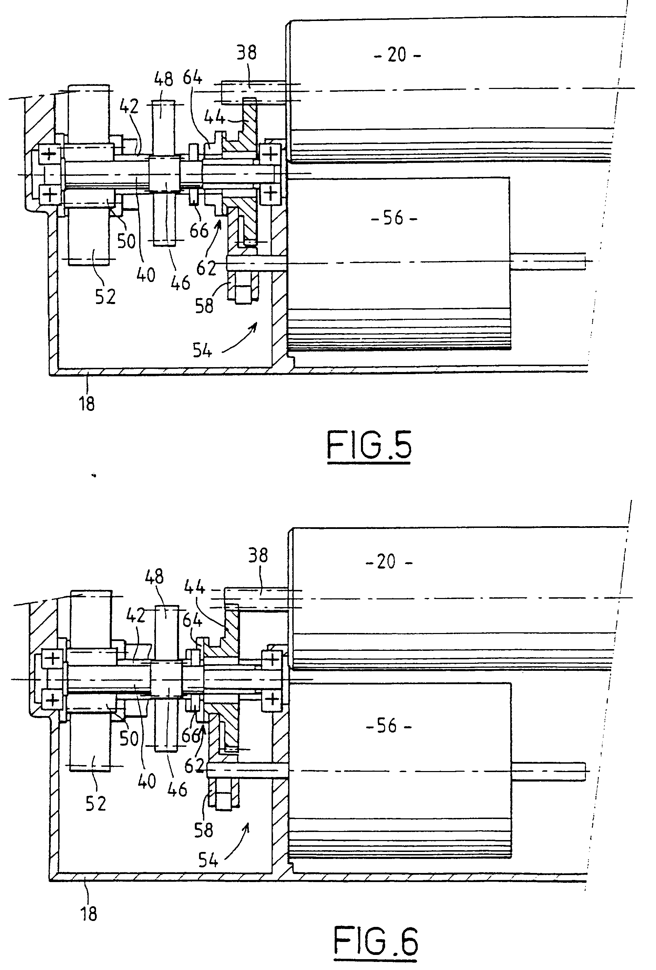

On comprend que, sous la commande de l'électro-aimant 56, le pignon 44 est déplaçable le long de l'arbre 40 sous l'action de la fourchette 58 entre une position en prise avec la goupille 66 telle que représentée sur la figure 6, dans laquelle l'arbre 40 et le pignon 44 sont solidaires en rotation. et une position décrabotée représentée sur la figure 5, dans laquelle l'arbre 40 peut tourner sans entraîner le pignon 44.

L'électro-aimant est relié pour son pilotage à une unité centrale de traitement d'informations 68, elle-même reliée à deux capteurs de fin de course 70, 72 disposés aux deux extrémités du rail 32. Ces capteurs sont adaptés pour coopérer avec la patte 31 en vue de détecter les positions extrêmes de l'organe de commande 24.

L'unité centrale de traitement d'informations 68 est adaptée pour commander le décrabotage des moyens de désaccouplement 26 lorsque la butée de fin de course 70 détecte que l'actionneur est dans sa position rétractée, ce qui correspond à la position fermée de la porte de l'avion.

Lors de la réception d'un ordre d'ouverture de la porte, l'unité centrale de commande 68 pilote l'électro-aimant 56 pour obtenir le recrabotage du pignon 44 de l'arbre 40.

Le détecteur de fin de course 72 est utilisé pour arrêter l'alimentation du moteur 20 lorsque l'actionneur est totalement déployé. Toutefois, il ne commande pas le décrabotage du crabot 45.

Ainsi, avec un tel actionneur, après fermeture complète de la porte de l'avion, le moteur 20 est désaccouplé mécaniquement de l'organe de commande 24. Ainsi, après déverrouillage des moyens de verrouillage 16, il est possible de déplacer manuellement la porte 12, le déplacement de celle-ci provoquant le mouvement des pièces mobiles du réducteur 24 sans toutefois provoquer l'entraînement de l'arbre moteur 38.

Un tel actionneur, bien qu'à propulsion électrique ne s'oppose pas à la manipulation de l'organe qu'il commande. Il peut ainsi être utilisé dans des applications où les contraintes de sécurité imposent que l'actionneur n'interdise pas un déplacement de l'organe commandé.

De plus, après fermeture de la trappe, l'actionneur ne provoque aucune contrainte dans la structure de l'avion.

## Revendications

1. Actionneur de manoeuvre d'une trappe d'accès d'un avion, comportant un corps (18) muni d'un organe moteur (20) et d'un organe de commande (24) mobile par rapport au corps (18) sous l'action de l'organe moteur (20), caractérisé en ce que l'organe moteur (20) est un moteur électrique, en ce que des moyens mécaniques (22) de transmission de mouvement sont montés dans le corps (18), entre le moteur électrique (20) et l'organe de commande (24), pour assurer l'entraînement dudit organe de commande (24) par le moteur électrique (20), lesquels moyens de transmission (22) comportent des moyens (26) de désaccouplement mécanique du moteur électrique (20) et de l'organe de commande (24), autorisant, après désaccouplement, le déplacement de l'organe de commande (24) indépendamment du moteur électrique (20), et en ce qu'il comporte des moyens (70) de détection d'un état de fermeture de la trappe, les moyens (26) de désaccouplement étant adaptés pour assurer le désaccouplement mécanique du moteur électrique (20) et de l'organe de commande (24) lors de la détection d'un état de fermeture de la trappe.

2. Actionneur selon la revendication 1, caractérisé en ce que les moyens de désaccouplement (26) comportent un crabot (64, 66) et des moyens (54) de manoeuvre du crabot pour son déplacement entre une position crabotée et une position décrabotée.

3. Actionneur selon la revendication 2, caractérisé en ce que les parties complémentaires (64, 66) du crabot sont portées, pour l'une (64), par un pignon (44) des moyens de transmission et pour l'autre (66) par un arbre de transmission (40) sur lequel le pignon (44) est monté coulissant entre la position crabotée et la position décrabotée, lequel pignon (44) est libre en rotation sur ledit arbre (40) lorsqu'il n'est pas craboté.

4. Actionneur selon la revendication 2 ou 3, caractérisé en ce que lesdits moyens (54) de manoeuvre du crabot comportent un électro-aimant (56).

5. Actionneur selon l'une quelconque des revendications précédentes, caractérisé en ce que lesdits moyens de détection comportent un capteur (70) porté par le corps (18) et adapté pour détecter une position extrême de l'organe de commande (24).

6. Actionneur selon l'une quelconque des revendications précédentes, caractérisé en ce que lesdits moyens de transmission (22) comportent un agencement à vis-écrou (30, 33) assurant un entraînement en translation dudit organe de commande (24) par rapport au corps (18) à partir du mouvement de rotation du moteur électrique (20).

7. Trappe d'accès motorisée d'un avion, comportant un panneau d'obturation (12) déplaçable par rapport à la structure (10) de l'avion, entre une position d'obturation d'une ouverture, et une position dégagée de cette ouverture, et un actionneur (14) selon l'une quelconque des revendications précédentes pour le déplacement dudit panneau d'obturation (12), la trappe comportant en outre des moyens (68, 70) d'activation des moyens de désaccouplement (26) de l'actionneur, lorsque le panneau d'obturation (12) est en position d'obturation.

8. Trappe selon la revendication 7, caractérisé en ce qu'elle comporte des moyens de verrouillage (16) du panneau d'obturation (12) en position d'obturation.
